(19) Europäisches Patentamt
European Patent Office
Office européen des brevets

(11) Publication number: **0 247 019 B1**

(12) **EUROPEAN PATENT SPECIFICATION**

(45) Date of publication of patent specification: **15.04.92**

(51) Int. Cl.5: **C09D 5/16**, C09D 163/00, C09D 195/00

(21) Application number: **87870065.7**

(22) Date of filing: **08.05.87**

(54) **Antifouling and anticorrosive coating for underwater structures.**

(30) Priority: **13.05.86 GB 8611623**

(43) Date of publication of application:
**25.11.87 Bulletin 87/48**

(45) Publication of the grant of the patent:
**15.04.92 Bulletin 92/16**

(84) Designated Contracting States:
**BE DE ES FR GR IT NL SE**

(56) References cited:
**FR-A- 2 116 765**
**FR-A- 2 384 831**
**GB-A- 1 113 268**
**GB-A- 2 095 263**
**US-A- 3 717 606**

**CHEMICAL ABSTRACTS, vol. 80, no. 18, 6th May 1974, page 90, abstract no. 97519p, Columbus, Ohio, US; & JP-A-73 97 934 (Y. TADASHI) 13-12-1973**

(73) Proprietor: **FINA RESEARCH S.A.**
**Zone Industrielle C**
**B-7181 Feluy(BE)**

(72) Inventor: **Rouw. Hart C.**
**Wethouder Van Damlaan 32**
**NL-3648 XM Wilnis(NL)**
Inventor: **Van der Poel, Hendrik**
**Turfschip 155**
**NL- 1186 XG Amstelveen(NL)**
Inventor: **Braeken,Jozef**
**Lindestraat 88**
**B-9470 Denderleeuw(BE)**

(74) Representative: **Leyder, Francis**
**c/o Fina Research S.A. Zone Industrielle C**
**B-6520 Feluy (Feluy)(BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 247 019 B1

## Description

The present invention relates to an antifouling and anticorrosive coating composition for underwater structures. In particular the present invention relates to an antifouling and anticorrosive coating for ship bottoms and for metallic structures which are exposed to sea water which pose severe corrosion problems.

The protection against corrosion of ship bottoms and other surfaces which are constantly exposed to the corrosive action of sea water, has long been a problem. The growth and accumulation of fouling organisms on such surfaces is also a problem.

Generally, the prevention of marine attachments, growth accumulation and corrosion on ship bottoms and other surfaces in underwater environments is achieved by applying coating systems, normally a dual paint system, to the surface which it is desired to protect. A base system is first applied consisting of one or more coats providing protection against corrosion. The protection of steel and other ferrous substrates is generally ensured by coatings prepared from bituminous compositions and phenolic pitches that may contain fillers and resins. On top of these coats, a second system is applied in order to prevent fouling, by slow release of toxic substances into the surrounding sea water. In addition to the anticorrosive system, a cathodic protection system is often used.

However, one of the main drawbacks of the known paint systems described above is that they tend to delaminate owing to the incompatibility between the anticorrosive layer and the antifouling layer, or owing to the electrochemical action of the cathodic protection. This obviously results in poor protection against fouling as well as against corrosion. Moreover, it is very difficult to prevent corrosion and marine growth on underwater structures over a prolonged period of time.

In order to improve these known paint systems, combined paint systems have been proposed, which generally incorporate a biocide in the anticorrosive coating. Such typical compositions are disclosed in Dutch Patents 6408317 and 6408318 wherein polyurethane is used together with tributyltin oxide or wherein epoxy resins modified with a polyamide, polyamine or a polysulfide resin are used together with tributyltin oxide. However, such compositions containing these resins do not lead to optimal anticorrosion properties or to suitable antifouling properties.

Several other compositions containing one type of biocide have been proposed but with limited success only, and with no significant improvement over known compositions.

In order to increase the duration of fouling protection, it has been proposed to use more sophisticated antifouling systems, the relative content of biocide being greatly increased. Indeed, U.S. Patent 3801534 (Esso) proposes a coating composition wherein the content of the biocide represents at least 55% and may reach 75%. However even this type of composition does not exhibit suitable antifouling properties, even with this high amount of biocide. Further, the anticorrosive properties of this composition are not sufficient to resist over a prolonged period of time.

Moreover, known paint systems wherein several antifouling components are incorporated into the anticorrosive composition, most often a pitch-epoxy paint, have the risk of being of poor stability, said poor stability probably resulting from chemical reactions between the various active compounds.

There is therefore a need for an improved anticorrosive and antifouling coating composition, which can give an adequate protection against corrosion, and which enables an improvement in the antifouling properties of the coating, the composition being such as to provide a paint of high stability.

According to the present invention there is provided an antifouling and anticorrosive coating composition comprising (i) a base vehicle formed from an epoxy resin and a substance selected from aromatic pitch-containing materials and thermoplastic hydrocarbon resins, (ii) a curing agent for the epoxy resin, and (iii) a mixture of antifouling biocides essentially comprising zinc oxide, a triorganotin salt, a metallic salt of an alkylene dithiocarbamic acid and a cuprous compound selected from cuprous oxide and cuprous thiocyanate, the amount of the cuprous compound being no greater than 7% by volume.

The main problem of the known antifouling paint compositions is the insufficient antifouling properties of the paint composition. A solution to this problem might be to increase the amount of the antifouling agent in the paint. However, it is found that such an increase reduces the stability of the paint for the reasons discussed above, and, in addition, the resulting paint film becomes brittle.

We have unexpectedly found that by using the mixture of biocides in accordance with the invention, a paint is obtained with strongly improved antifouling properties and stability while maintaining suitable anticorrosive properties.

It is generally recognised that the best antifouling-anticorrosive coatings should meet all the following requirements:

(a) The antifouling properties should be obtained with only one coat giving at least a period of protection of 2 years.

(b) The stability of the paint should be at least 6 months without gelling.

(c) Suitable anticorrosive properties should be obtained with one coat of 250 micron thickness for a protection against salt water even under cathodic protection.

As far as we are aware known coating compositions do not meet these three requirements. Unexpectedly, the coating compositions of the invention are found to meet each of the three criteria.

Examples of suitable epoxy resins for use as the paint vehicle include epoxy ether resins having a 1,2-epoxy equivalency greater than 1, such as the reaction products of polyhydric alcohols or polyhydric phenols with epichlorohydrin or glycerol chlorohydrin. In general, the epoxy ether resin will exhibit an epoxy equivalency less than 2. The 1,2-epoxy equivalency may be defined as the number of 1,2-epoxy groups per molecule. (as compared to the epoxy value of an epoxy resin which is the number of epoxy groups in 100 grams of the resin). Use of these materials, among other advantages, enables the composition of the invention to become cold or air set reasonably quickly, and to overcome the softness that is normally inherent in coal tar pitches. Specific examples of such resins are:

(1) the polyglycidyl ethers of resorcinol, catechol, hydroquinone, bis-(4-hydroxyphenyl)-2,2-propane (i.e., bisphenol A), 4,4′-dihydroxy-benzophenone, bis-(4-hydroxyphenyl)-1,1-ethane, tetrakis(4-hydroxyphenyl)-ethane, bis-(4-hydroxyphenyl)-1,1-isobutane, bis-(4-hydroxyphenyl)-2,2-butane, bis-(4-hydroxy-2-methylphenyl)-2,2-propane, bis-(4-hydroxy-2-t-butylphenyl)-2,2-propane, bis-(2-hydroxynaphthyl)-methane, 1,5-dihydroxynaphthalene, ethylene glycol, propylene glycol, trimethylene glycol, diethylene glycol, triethylene glycol, glycerol, dipropylene glycol, diglycerol, erythritol, mannitol, sorbitol, polyallyl alcohol, polyvinyl alcohol;

(2) the novolac resins e.g., the novolac resin obtained from 4 moles of phenol and 3 moles of formaldehyde, as well as other novolacs having 3 to 7 phenolic nuclei, phloroglycinol, 2,4,4′-trihydroxy diphenyl dimethyl methane, 4,4-dihydroxy diphenyl sulfone and 4,4′-dihydroxy biphenyl. There can also be used other epoxy resins and resin formers having a 1,2-epoxy equivalency of greater than 1 including polymeric butadiene dioxide, diglycidyl ether, allyl glycidyl ether, glycidyl methacrylate, glycidyl esters of trimerized linoleic acid, and diglycidyl esters of dimerized linoleic acid.

The pitch-containing material used in the present compositions is preferably coal tar pitch, but coal tar itself, including pitch, or other aromatic pitches may also be used. Also suitable are synthetic thermoplastic hydrocarbon resins such as polyindene resins, coumarone-indene resins, terpene phenolic resins, styrene acrylonitrile indene terpolymers, and low molecular weight polystyrenes.

According to the invention, the said epoxy resins are preferably modified with a coal tar pitch or coal tar pitch-containing material. These materials include coal tar pitch, refined coal tar, coal tar (which contains coal tar pitch together with more volatile organic materials), coal tar fractions, such as RT-5 and RT-9 (road tars). Other suitable pitch containing materials are phenolic pitch, petroleum pitch, aromatic petroleum pitches, pyrobitumen, straight-run, blown-, cracked-, aromatic-, and polymerized asphalts, extract bitumen and pine tar. The preferred aromatic petroleum pitches are alkyl substituted polynuclear aromatic hydrocarbons having a high degree of alkylation, the alkyl groups in general having short chains, generally of not more than 3 carbon atoms. Such aromatic petroleum pitches usually have a boiling range of 480-1000 ° F, an aromatics content of over 90% and a paraffin content of less than 8%, usually less than 6%, and infrared indexes (measured at 3.3 to 3.4 microns) of from 0.70 to 1.00.

The quantity of epoxy resin admixed with the coal tar pitch and, if desired, filler and vehicle can vary widely. Thus, the compositions of the invention may comprise from 5 to 95 parts of the hydrocarbon resin or of the coal tar pitch with 95 to 5 parts of epoxy resin. Generally, however, the particularly preferred ratio of coal tar pitch to epoxy resin is about 1:1, or substantially equal proportions by weight.

Normally, there is also added 0.05 to 1 part by wt. of a curing agent per part of epoxy resin, although other amounts may be found suitable. Typical curing agents include diethylene triamine, triethylene tetramine, dicyandiamide, melamine, triethanolamine, N,N-dibutyl-1,3-propane diamine, amide from dimerized linoleic acid and ethylene diamine, phosphoric acid, aluminum chloride and other Friedel-Crafts catalysts, oxalic acid and phthalic anhydride. Generally, use of these curing agents will permit the rapid setting or curing of the coating at "cold" or ambient temperatures, for example, from 10 to 60 ° C, such that special curing procedures need not be employed. Since the epoxy. resins may be set into a cured state simply by the addition thereto of the curing agent, these two ingredients should be kept separated until just before application of the composition to the surface to be coated. Accordingly, the products of the invention are desirably made up in the form of a two-component system, one component containing the curing agent and the other containing the epoxy resin.

In the composition of the invention, the proportion of coal tar pitch and epoxy resin represents from about 40 to about 78% by volume.

The antifouling system of toxins used in the invention generally comprises an organotin compound, a

metallic salt of dithiocarbamic acid and zinc oxide and a cuprous component.

The anitfouling biocide system is generally used in an amount which comprises from 22% to 60% by volume of the total composition.

Preferred organotin compounds are trialkyl tin salts, oxides and sulfides having the general formula

$R_3$ Sn A or $(R_3Sn)_2$ B

wherein R is an alkyl radical having 1 to 8 carbon atoms,
A is a monovalent radical selected from halogen and monovalent carboxylic acid radicals, and
B is a divalent radical selected from oxygen, sulphur and divalent carboxylic acid radicals.

Suitable alkyl radicals R include those ranging from methyl to octyl, although propyl and butyl are preferred, especially butyl. Different alkyl groups may be present in the same trialkyltin radical. The group A or B attached to the organotin radical(s) may be an oxide, sulfide or salt forming group such as chloride, or bromide, or fluoride, or may be an organic salt or ester forming group such as the acetate, propionate, butyrate, fumarate, formate, maleate or ortho phenylphenate. Acetates, chlorides, fluorides and oxides are especially preferred and to a lesser extent, maleates. Typical examples of such organotin compounds include triethyltin acetate, tri-n-propyltin acetate, tri-n-butyltin acetate, tri-isopropyltin acetate, triamyltin acetate, dibutyl-propyltin chloride, trioctyltin acetate, bis-(tri-n-butyltin) maleate, bis-(tri-n-propyltin) maleate, bis(tri-n-propyltin)oxide, bis(trioctyltin)oxide, tri-n-butyltin bromide, tri-n-butyltin propionate, tri-n-propyltin butyrate, tri-n-butyltin formate, bis(tri-n-butyltin)fumerate and tri-ethyltin chloride, tri-n-butyltin oxide, tri-n-butyltin fluoride and tri-phenyltin fluoride. The preferred compounds may be used alone, or in combinations and mixtures with each other, as well as with other antifoulants and biocides.

The tributyltin fluoride and oxide are generally preferred because they are the most common products available on the market. However, triphenyltin fluoride and tributyltin acetate may also be used successfully.

These organotin compounds may be incorporated into the pitch/epoxy resin base vehicle in varying amounts. It is an objective of the invention to provide the most effective and yet economical amounts, however, and accordingly amounts in the range of 5 to 35% are preferred.

At a concentration lower than 5%, the efficacy of the composition is not sufficient, while at a concentration higher than 35%, the total effect is not reached due to the lack of other toxins.

The second component of the antifouling system is a metallic salt of an alkylene dithiocarbamic acid which is represented by the formula:-

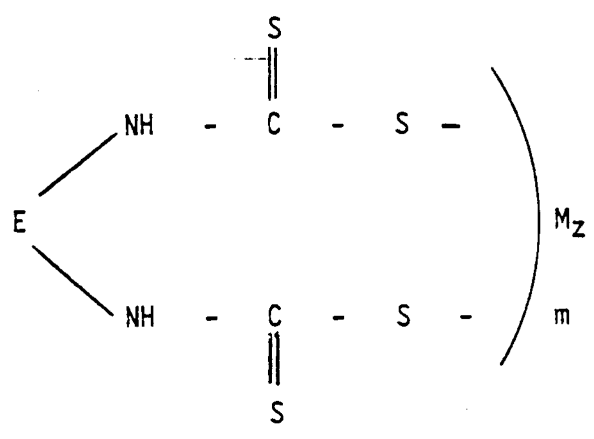

wherein E represents an alkylene radical selected from ethylene, propylene, and butylene; M represents a metal selected from Zn, Ni, Mn, Cu, Co, Pb, Fe, Sn, Hg and the like; and m and z are defined by one of the following combinations:
m is 1 and z is 2 when M is monovalent
m is 1 and z is 1 when M is divalent
m is 3 and z is 2 when M is trivalent, and
m is 2 and z is 1 when M is tetravalent.

Typical examples of such metallic salts include:

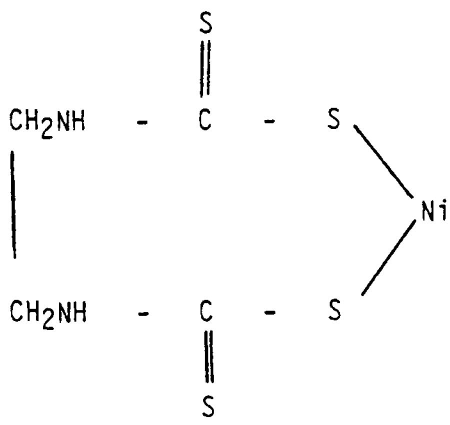 ;

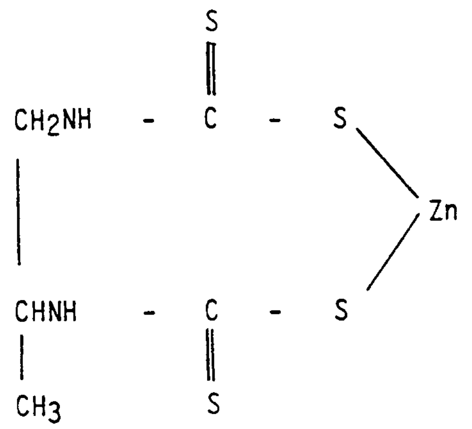 ;

(I)

(II)

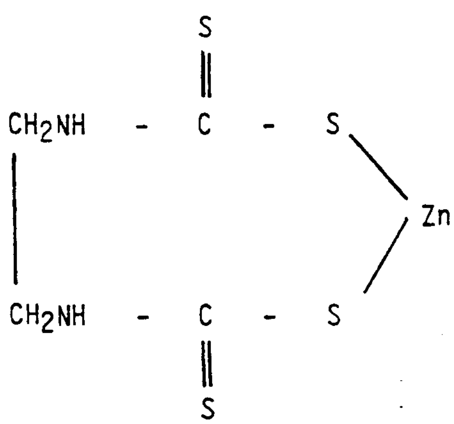 ;

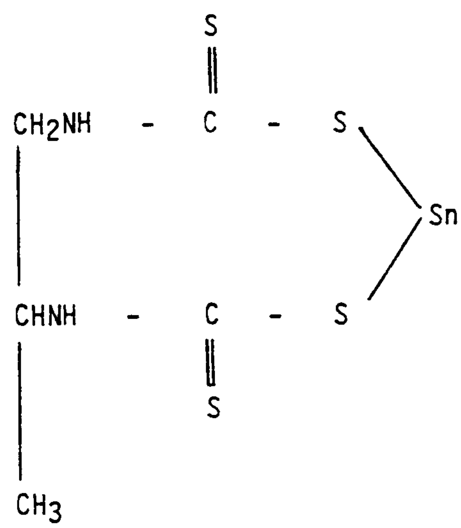

(III)

(IV)

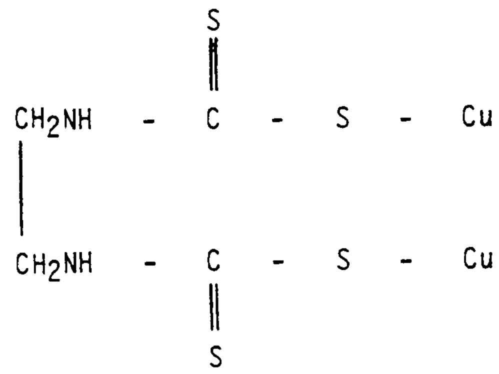

(V)

Compound (III) being generally preferred owing to its ready availability.

The metallic salt of the alkylene dithiocarbamic acid may also be incorporated in the pitch/epoxy resin in varying amounts which generally range from about 5 to 25% by volume of total composition. At concentrations lower than 5% the efficacy of the composition is not sufficient to see a significant effect, while at concentrations higher than 25%, the total effect is not reached due to the lack of other toxins.

The antifouling system of the present invention also includes an inorganic biocide such as metallic salts or oxides. Typically the antifouling system comprises from 0 to 25% by volume of zinc oxide.

However the most critical component in the antifouling system of the present invention is the cuprous component, which may be used in the form of cuprous oxide or cuprous thiocyanate. Indeed, we have unexpectedly found that if the cuprous component is not present, a rapid gelling of the base paint occurs. The presence of the cuprous component in suitable amount brings the necessary stability to the paint composition. Though cuprous compounds are well known antifouling biocides by themselves, at the low levels they are used in the formulations of the invention, their contribution to the antifouling spectrum arises from a synergetic combination with other biocides.

Generally, the cuprous compound is used in an amount which should not exceed 7%. The amount of cuprous oxide is preferably from 0.5 to 5% by volume, more preferably from 0.8 to 2% by volume. It has also been found that at higher concentration the cuprous oxide is not effective to avoid the gelling phenomenon.

With the antifouling biocide of the invention, we have unexpectedly found that the total amount of biocide may be decreased regarding the teaching of U.S. Patent 3801534 (Esso), without impairing the antifouling properties; furthermore, the compositions of the invention are more stable over, and have improved antifouling properties relative to, those disclosed in all the prior art.

The paint of the invention also contains appropriate hardeners which are amino amides and epoxy adducts of aliphatic, cycloaliphatic and aromatic diamines. Typical paint/hardener ratios are from 80:20 up to 99:1 and preferably between 93-85:7-15.

Use of the coating compositions of the present invention provides anticorrosive-antifouling coatings which give improved antifouling properties.

The paint compositions of the present invention are both anticorrosive and antifouling and have improved mechanical properties. We have found that the present paint compositions can give the same protection against corrosion and fouling with less coats than paint systems of the prior art.

Furthermore, the present anticorrosive-antifouling paints are found to be stable upon prolonged storage.

In addition, an advantage of the paint of the invention is a larger service life over known anticorrosive antifouling paints, which advantage appears to be attributable to an erosion phenomenon of the upper layer of paint, thus facilitating continuous leaching of biocides from the paint film. We have noted an additional service life of more than 5 months over traditional long life antifouling paints.

The present invention is illustrated by the following Examples.

Example 1

A paint composition A was prepared by uniformly mixing the following components:-

| | Paint Composition A (vol. %) |
|---|---|
| Epoxy resin (Epikote 828 from Shell) | 18.5 |
| Coal tar | 31.5 |
| Tributyltin fluoride | 22.0 |
| Zinc oxide | 15.5 |
| Zinc ethylenebisdithiocarbamate | 10.0 |
| Cuprous oxide | 1.5 |
| Bentone | 1.0 |

A mixture of xylene and ethylglycol was used to thin paint composition A to reach a viscosity of 12 P-(poise)

This paint was tested for storage stability.

After 2 months at 40 ° C, the viscosity was 13 P(poise)
After 6 months at 40 ° C, the viscosity was 14 P(poise)
By way of comparison a paint composition B having the same composition as composition A but in which the cuprous oxide has been replaced by the same volume of zinc ethylenebisdithiocarbamate (total volume of this zinc composition being 11.5%), was tested for storage stability. After 2 weeks at 40 ° C, the paint had gelled and was therefore unsuitable for any application.

Paint composition A was then blended with m-xylenediamine as amino type hardener in an amount corresponding to 10% of the total paint composition.

This paint was then applied on blasted steel panels. The thickness of the coating was about 150 microns.

These panels were exposed to a marine environment in the South of Holland for 18 months.

The panels remained free from both algae and barnacles for the whole period.

By way of comparison, a paint composition C containing the same amino hardener as above was applied on similar panels. Paint composition C had the following components:-

| | Paint Composition C (vol. %) |
|---|---|
| Epoxy resin (Epikote 828 from Shell) | 18.5 |
| Coal tar | 31.5 |
| Tributyltinfluoride | 34.5 |
| Zinc oxide | 14.5 |
| Bentone | 1.5 |

A mixture of xylene and ethylglycol was used to thin paint composition C so as to attain a viscosity of 12 P.

This paint did not contain a dithiocarbamic acid salt nor cuprous oxide.

After 2 months exposure, the surface of the panel was 100% covered with algae.

Example 2

A paint was prepared by uniformly mixing the following components, expressed in vol %,

| | |
|---|---|
| Epoxy resin (Epikote 828 from Shell) | 18.5 |
| Coal tar | 31.5 |
| Tributyltinfluoride | 22 |
| Zinc oxide | 15.5 |
| Manganese ethylene bisdithiocarbamate | 10 |
| Cuprous oxide | 1.5 |
| Bentone | 1.0 |

A mixture of xylene and ethylglycol was used to thin the paint composition to reach a viscosity of 8 P.

The storage stability of the paint was tested. After 2 months at 40 ° C, the viscosity increased from 8 P to 10 P.

The paint was blended with an amino type hardener, and blasted steel panels were coated with the paint and thereafter exposed to marine environment for 18 months. The panels were found to be free from algae and barnacles for the whole 18 month period.

Example 3

Paint compositions I, II and III were prepared by mixing the respective components shown in Table I. The amounts in Table I are expressed in volume %.

Table I

| | I | II | III |
|---|---|---|---|
| Epoxy resin (Epikote 828) | 25 | 30 | 20 |
| Coal tar | 25 | 40 | 30 |
| Tributyltin fluoride | 15 | - | - |
| Tributyltin acetate | - | 10 | - |
| Triphenyltin fluoride | - | - | 17 |
| Zinc oxide | 6 | 9 | 15 |
| Zinc ethylene bis dithiocarbamate | 25 | 9 | 15 |
| Cuprous oxide | 3 | - | - |
| Cuprous thiocyanate | - | 1 | 2 |
| Bentone | 1 | 1 | 1 |

A mixture of xylene and ethylglycol was used to thin the paints of compositions I, II and III to reach a viscosity of 12 P.

The storage stability of each of the paints was determined; after two months at 40 ° C, no significant difference between the initial and the final viscosity was found.

Each of the paints was then mixed with an amino hardener and applied to blasted steel panels. The thickness of the paint coating was about 300 microns.

After 6 months immersion in sea water, no sign of deterioration was found to appear.

On another series of panels coated with compositions I, II and III, an area of about 3 $cm^2$ was not coated, exposing bare metal.

This series of panels was immersed in sea water and subjected to impressed current CP at - 1000 mV/relative to Ag/AgCl electrode.

After 10 months the coating did not show any sign of deterioration.

Example 4

Paint compositions IV and V were prepared by mixing the respective components shown in Table II, amounts of components being expressed as volume %.

TABLE II

| | IV | V |
|---|---|---|
| Epoxy resin (Epikote 828) | 18.5 | 18.5 |
| Coal tar | 31.5 | - |
| Hydrocarbon resin | - | 31.5 |
| Tributyltin fluoride | 22 | 22 |
| Zinc oxide | 10 | 15.5 |
| Zinc ethylene bis dithiocarbamate | 10 | 10 |
| Iron oxide | 5.5 | - |
| Cuprous oxide | 1.5 | 1.5 |
| Bentone | 1 | 1 |

A mixture of xylene and ethylglycol was used to thin the paints to reach a viscosity of 12 P.

Each paint was applied to a stainless steel disk with a diameter of about 20 cm. The thickness of the paint coating was about 100 microns. The disks were rotated continuously in refreshed sea water at a peripheral speed of 18 knots.

After one month the decrease in film thickness was of about 4 microns. Such a value may be considered to have a positive influence on the effectiveness of the toxin leaching process from the paint film and consequently on the antifouling performance.

By way of comparison, a paint which does not contain tributyltin fluoride was tested under the same procedure. The erosion after one month was less than 1 micron, which cannot be considered significant. Hence, this formulation lacks the enhanced leaching effectiveness of the previous formulation.

This comparative example clearly shows the necessity of the presence of all the components of the antifouling system of the invention to obtain the desired properties.

**Claims**

**1.** An antifouling and anticorrosive coating composition comprising

(i) a base vehicle formed from an epoxy resin and a substance selected from aromatic pitch-containing materials and thermoplastic hydrocarbon resins wherein the weight ratio of epoxy resin to pitch-containing materials ranges from 5/95 to 95/5,

(ii) a curing agent for the epoxy resin, and characterized by the fact that it comprises in addition

(iii) from 22 to 60% by volume of a mixture of antifouling biocides essentially comprising :

a) from 5 to 35% by volume of said composition of a trialkyltin compound of formula

$$R_3Sn\ A \text{ or } (R_3Sn)_2\ B$$

wherein R is an alkyl radical having 1 to 8 carbon atoms,

- A is a monovalent radical selected from halogen and monovalent carboxylic acid radicals, and
- B is a divalent radical selected from oxygen, sulphur and divalent carboxylic acid radicals;

b) from 5 to 25% by volume of said composition of a metallic salt of an alkylene dithiocarbamic acid which is represented by the formula :

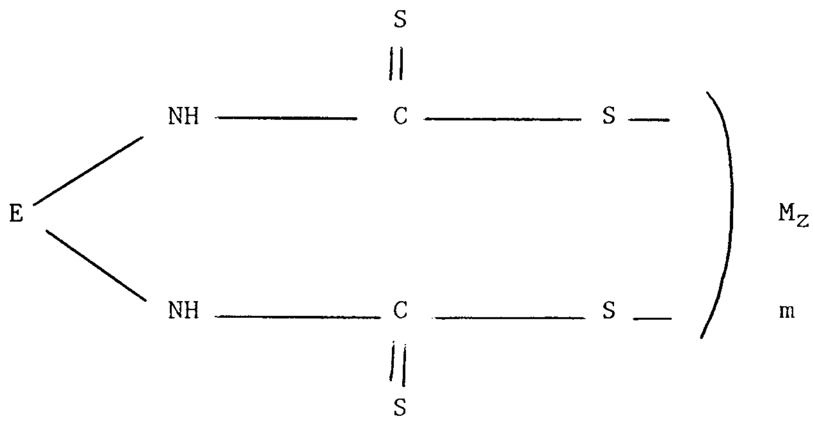

wherein E represents an ethylene, propylene, or butylene group;

- M represents a metal selected from Zn, Ni, Mn, Cu, Co, Pb, Fe, Sn, Hg and the like; and m and z are defined by one of the following combinations :
  m is 1 and z is 2 when M is monovalent
  m is 1 and z is 1 when M is divalent
  m is 3 and z is 2 when M is trivalent, and
  m is 2 and z is 1 when M is tetravalent

c) zinc oxide which is present in an amount up to 25% by volume of said composition;
d) cuprous oxide which is present in an amount of from 0.5 to 5% by volume of said composition;

**2.** A coating composition according to Claim 1 wherein the weight ratio of epoxy resin to pitch-containing materials is 1:1.

**3.** A coating composition according to any one of the preceding claims, wherein the pitch-containing material is selected from coal tar, coal tar pitch, polyindene resin, coumarone-indene resins, terpene phenolic resins, styrene acrylonitrile indene terpolymers and low molecular weight polystyrenes.

**4.** A coating composition according to any one of the preceding claims, wherein the curing agent (ii) is used in an amount of 0.05 to 1 part by weight per part of epoxy resin.

**5.** A coating composition according to Claim 1, wherein the amount of cuprous oxide is from 0.8 to 2% by volume of the composition.

**6.** A coating composition according to any one of the preceding claims, comprising a mixture of biocides comprising tri-n-butyltin fluoride, zinc oxide, zinc ethylenebisdithiocarbamate and cuprous oxide.

**Revendications**

**1.** Une composition de peinture antisalissure et anti-corrosion comprenant :
(i) un liant de base formé à partir d'une résine époxyde et d'une substance choisie parmi des matériaux renfermant des brais aromatiques et des résines hydrocarbonées thermoplastiques avec le rapport pondéral entre la résine époxyde et les matériaux à base de brai variant de 5/95 à 95/5,
(ii) un agent durcissant pour la résine époxyde, et caractérisée par le fait qu'elle comprend en plus
(iii) de 22 à 60% en volume d'un mélange de biocides antisalissures comprenant essentiellement :
a) un composé trialkylétain à raison de 5 à 35% en volume de ladite composition, représenté par la formule

$R_3SnA$ ou $(R_3Sn)_2B$

où

- R est un radical alkyl ayant 1 à 8 atomes de carbone,

- A est un radical monovalent choisi parmi les radicaux halogénés ou radicaux monovalents d'un acide carboxylique,
- B est un radical divalent sélectionné parmi l'oxygène, le soufre et les radicaux divalents d'un acide carboxylique;

b) un sel métallique d'acide alkylène dithiocarbamique à raison de 5 à 25% en volume de ladite composition, représenté par la formule

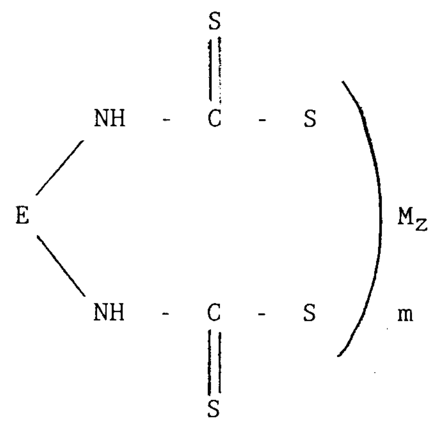

où

- E représente le groupement éthylène, propylène ou butylène,
- M représente un métal choisi parmi Zn, Ni, Mn, Cu, Co, Pb, Fe, Sn, Hg et semblables, avec m et z définis par l'une des combinaisons suivantes :
  m vaut 1 et z vaut 2 lorsque M est monovalent
  m vaut 1 et z vaut 1 lorsque M est divalent
  m vaut 3 et z vaut 2 lorsque M est trivalent
  et m vaut 2 et z vaut 1 lorsque M est tétravalent;

c) oxyde de zinc présent en quantité jusqu'à 25% en volume de ladite composition;
d) oxyde de cuivre présent en quantités de 0,5 à 5% en volume de ladite composition.

2. Une composition de peinture selon la revendication 1 où le rapport pondéral entre la résine époxyde et les matériaux à base de brai est de 1:1.

3. Une composition de peinture selon l'une quelconque des précédentes revendications où le matériau contenant le brai est choisi parmi goudron de houille, brai de goudron de houille, résines polyindène, résines coumarone-indène, résines terpènephénoliques, terpolymères styrène-acrylonitrile-indène et polystyrènes de bas poids moléculaire.

4. Une composition de peinture selon l'une quelconque des précédentes revendications où l'agent durcissant est utilisé en quantité de 0,05 à 1 partie en poids par partie de résine époxyde.

5. Une composition de peinture selon la revendication 1 où la quantité d'oxyde de cuivre varie de 0,8 à 2% en volume de la composition.

6. Une composition de peinture selon l'une quelconque des précédentes revendications, contenant un mélange de biocides comprenant du fluorure de tri-n-butylétain, de l'oxyde de zinc, de l'éthylènebisdithiocarbamate de zinc et de l'oxyde de cuivre.

**Patentansprüche**

1. Fäulnis- und korrosionsverhindernde Überzugszusammensetzung, enthaltend
   (i) ein Grundbindemittel, gebildet aus einem Epoxyharz und einer Substanz, ausgewählt aus aromatischen pechhaltigen Materialien und thermoplastischen Kohlenwasserstoffharzen, wobei das Gewichtsverhältnis von Epoxyharz zu pechhaltigen Materialien im Bereich von 5/95 bis 95/5 liegt,

(ii) ein Härtungsmittel für das Epoxyharz, und dadurch gekennzeichnet, daß außerdem enthalten sind
(iii) 22 bis 60 Vol.-% eines Gemisches fäulnisverhindernder Biozide, das im wesentlichen enthält:
a) 5 bis 35 Vol.-% der Zusammensetzung einer Trialkylzinnverbindung der Formel:

$R_3Sn$ A oder $(R_3Sn)_2$ B

wobei R ein Alkylradikal mit 1 bis 8 Kohlenstoffatomen darstellt,
- A ist ein einwertiges Radikal, ausgewählt aus Halogen- und einwertigen Carbonsäureradikalen, und
- B ist ein zweiwertiges Radikal, ausgewählt aus Sauerstoff-, Schwefel- und zweiwertigen Carbonsäureradikalen;

b) 5 bis 25 Vol.-% der Zusammensetzung eines metallischen Salzes einer Alkylendithiocarbamidsäure, die durch die Formel dargestellt wird:

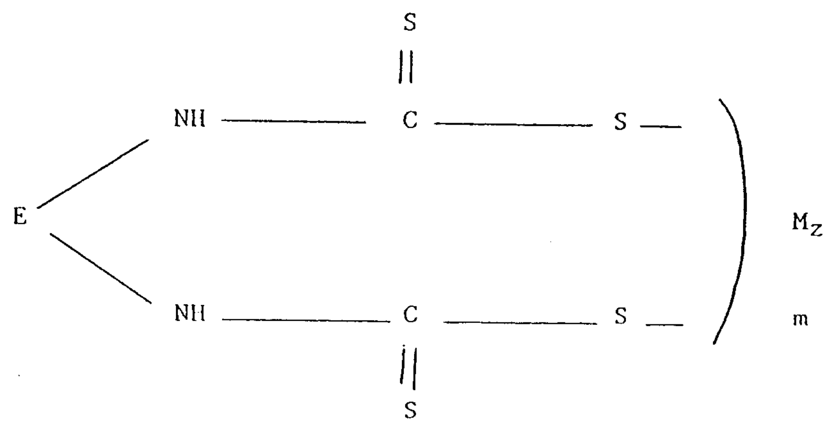

wobei E eine Ethylen-, Propylen- oder Butylengruppe darstellt;
- M stellt ein Metall dar, ausgewählt aus Zn, Ni, Mn, Cu, Co, Pb, Fe, Sn, Hg und dergleichen; und m und z sind durch eine der folgenden Kombinationen definiert:
  m ist 1 und z ist 2, wenn M einwertig ist
  m ist 1 und z ist 1, wenn M zweiwertig ist
  m ist 3 und z ist 2, wenn M dreiwertig ist, und
  m ist 2 und z ist 1, wenn M vierwertig ist

c) Zinkoxid, das in einer Menge von bis zu 25 Vol.-% der Zusammensetzung vorhanden ist;
d) Kupfer(I)-oxid, das in einer Menge von 0,5 bis 5 Vol.-% der Zusammensetzung vorhanden ist.

**2.** Überzugszusammensetzung nach Anspruch 1, wobei das Gewichtsverhältnis von Epoxyharz zu pechhaltigen Materialien 1:1 beträgt.

**3.** Überzugszusammensetzung nach einem der vorhergehenden Ansprüche, wobei das pechhaltige Material ausgewählt ist aus Kohlenteer, Kohlenteerpech, Polyindenharz, Cumaron-Indenharzen, Terpen-Phenolharzen, Styrol-Acrylonitril-Inden-Terpolymeren und Polystyrolen mit niedrigem Molekulargewicht.

**4.** Überzugszusammensetzung nach einem der vorhergehenden Ansprüche, wobei das Härtungsmittel (ii) in einer Menge von 0,05 bis 1 Gewichtsteil pro Teil Epoxyharz verwendet wird.

**5.** Überzugszusammensetzung nach Anspruch 1, wobei die Menge Kupfer(I)-oxid 0,8 bis 2 Vol.-% der Zusammensetzung beträgt.

**6.** Überzugszusammensetzung nach einem der vorhergehenden Ansprüche, enthaltend ein Gemisch von Bioziden, das tri-n-Butylzinnfluorid, Zinkoxid, Zinkethylenbisdithiocarbamat und Kupfer(I)-oxid enthält.